(19)

**Europäisches Patentamt**
**European Patent Office**
**Office européen des brevets**

(11)  **EP 4 497 013 B1**

(12)  **EUROPEAN PATENT SPECIFICATION**

(45) Date of publication and mention
of the grant of the patent:
**17.12.2025   Bulletin 2025/51**

(21) Application number: **23731576.7**

(22) Date of filing: **01.06.2023**

(51) International Patent Classification (IPC):
**G01S 5/02** *(2010.01)*

(52) Cooperative Patent Classification (CPC):
**G01S 5/021; G01S 1/042;** G01S 5/06; G01S 5/14;
G01S 13/878

(86) International application number:
**PCT/EP2023/064758**

(87) International publication number:
**WO 2023/232981 (07.12.2023 Gazette 2023/49)**

(54) **POSITIONING METHOD AND SYSTEM FOR COMPENSATION OF INTERNAL PROPAGATION DELAYS**

POSITIONIERUNGSVERFAHREN UND -SYSTEM ZUR KOMPENSATION VON INTERNEN AUSBREITUNGSVERZÖGERUNGEN

PROCÉDÉ ET SYSTÈME DE POSITIONNEMENT POUR LA COMPENSATION DE DÉLAIS DE PROPAGATION INTERNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **02.06.2022   EP 22177089**

(43) Date of publication of application:
**29.01.2025   Bulletin 2025/05**

(73) Proprietor: **Ecole Royale Militaire - Koninklijke Militaire**
**School**
**1000 Brussel (BE)**

(72) Inventors:
• **SCHEERS, Bart**
**2840 Rumst (BE)**
• **CHAUDHARY, Hafeez M.**
**1082 Brussels (BE)**

(74) Representative: **AWA Benelux**
**AWA Benelux SA**
**Tour & Taxis - Royal Depot box:216**
**Havenlaan 86c Avenue du Port**
**1000 Bruxelles (BE)**

(56) References cited:
EP-A1- 3 826 381          WO-A1-2019/059478
US-A1- 2011 268 097      US-A1- 2014 253 388
US-A1- 2017 131 383

**Description**

**Technical field**

The present invention is related to positioning and navigation systems, which determine position based on time-of-flight (ToF) of wireless messages between anchor nodes with known position and client nodes or tags with unknown position. The present invention is also related to a method of operating such positioning system, and to a method of determining a position through such a system.

**Background art**

Indoor positioning and navigation systems (IPNS) are used to locate and track objects or people in real time and to navigate in unknown places, usually within a building or other contained area with no or poor GPS coverage. Traditionally, these systems comprise multiple fixed reference network devices, called anchor nodes, with known position, and client network devices, referred to as tags, with unknown position. Tags try to measure or estimate their distance or direction relative to the anchor nodes (or vice-versa). The position of the tags can then be calculated based on this information. Typical examples of IPNS include the tracking and location of assets and patients in healthcare, the tracking and location of pallets, packages and items in warehousing and logistics applications, monitoring of farm animals, etc. In the navigation domain, typical examples include a human or a robotic device navigating between two points in a building.

Most methods for determining position utilize the time-of-flight (ToF) of messages which are communicated wirelessly between the anchor nodes and the tags. Any kind of wireless communication technology can be used for determining position, also referred to as ranging, in particular wireless communication technologies based on radio frequency (RF) signals.

RF ranging techniques have significant effect on the localization accuracy and system complexity. Two of the most popular RF ranging techniques are received signal strength based (RSSI) ranging and time-based ranging, e.g., based on ultra-wide band (UWB) RF signals. UWB is a communication channel that spreads information out over a wide portion of the frequency spectrum. This allows UWB receiver to accurately timestamp the received packets. It is generally accepted that ranging based on RSSI is inaccurate in an indoor environment. In UWB time-based ranging the distance between a tag and an anchor node is obtained using measurements on the signal propagation delay or ToF. This can be accomplished using one-way ranging, also called Time-of-Arrival (ToA), two-way ranging (TWR), symmetrical double-sided two-way ranging (SDS-TWR), or time difference-of-arrival (TDoA).

The easiest techniques to implement are the TWR and the SDS-TWR. In these techniques, a short packet is sent back and forth between two nodes. Based on the timestamps, the round-trip time is measured, without a common time reference. The big advantage of this is that there is no need for clock synchronization amongst tags and anchor nodes. A drawback of this approach is that the tags need to have a transmitter for the two-way exchange of the messages and consume airtime to send these messages. As such, the number of tags in this approach will be limited to the available airtime.

In the TDoA technique, a tag broadcasts a packet and the anchor nodes measure the arrival time. Based on the differences in arrival time at different anchor nodes, the position of the tag is estimated. For this technique, the clocks of the anchor nodes need to be synchronized, either through a wired connection or wirelessly. There is no need for the tag to be synchronized. There is an alternative way of implementing a TDoA system, in which signals are broadcasted from synchronized anchors using CDMA (code-division multiple access) and the tag measures the TDoA between the signals (similar technique is used in GPS).

One last technique is based on (one-way) ToA. In this technique, the anchor nodes each send a packet, normally using a TDMA (time division multiple access) scheme, and the tag measures the ToF of each transmission. This technique is the most difficult to implement, as not only the anchors, but also the mobile tag needs to have a common time reference. However, one advantage is that the technique allows an unlimited number of tags to be used.

In all the above positioning techniques, one common problem is coping with internal propagation delays generally known as antenna delays or hardware propagation delays internal to the wireless communication devices. These hardware propagation delays affect the timestamp of the various ranging signals and hence directly affect the positioning accuracy. Typically, the clocks of the anchor nodes are accurately synchronized with a master clock and the internal hardware propagation delays are taken into account in the positioning equations that are utilized to calculate the position of a tag.

WO 2012/170046 discloses a hybrid positioning mechanism for wireless communication devices. The wireless communication device detects a request message and a corresponding response message exchanged between a master access point and one or more target access points, and accordingly determines TDOA information associated with the one or more target access points. The wireless communication device additionally receives, from the master access point, round-trip time (RTT) measurement information of a request message and a corresponding response message exchanged between the master access point and the one or more target access points. The wireless communication device calculates its position information based on the TDOA information and the RTT measurement information. Both the RTT measurement information and the TDOA information comprise internal propagation time intervals and external propagation time intervals associated with the master access point, the target access point and the wireless communication device. Only by solving enough positioning equations, can these be solved for the external propagation time intervals to obtain accurate positioning information. The document US2017/131383A1 also discloses some relevant prior art.

## Summary of the invention

There is a need in the art to provide a ToF-based positioning system and related positioning method which takes account of (internal) hardware propagation delays more easily, resulting in reduced computation effort and/or reduced system or programming complexity.

According to a first aspect of the present disclosure, there is therefore provided a method of determining position information of a client device as set out in the appended claims. In a method of determining position information of a client device, the client device and a plurality of reference devices communicate with one another over a wireless communication network. The plurality of reference devices comprise a master device and target devices. Clocks of the target devices are synchronized with a clock of the master device. Advantageously, the clocks of the target devices are synchronized with the clock of the master device based on one-way message information (pseudo-range information) and prior known range (time-of-flight) information between the master device and the target device, allowing for a simple synchronization method. The clocks of the target devices can be synchronized with the clock of the master device such that a residual clock offset between the clocks of the target devices and the clock of the master device is obtained representative of a sum of a transmit antenna delay of the master device and a receive antenna delay of the respective target device.

Methods according to the present disclosure comprise determining for each of the target devices a first time correction representative of, or consisting of, a sum of a transmit antenna delay of the respective target device, a transmit antenna delay of the master device, a receive antenna delay of the respective target device and a receive antenna delay of the master device. The first time correction can be determined based on performing a two-way ranging between the master device and the respective target device, including measuring a round-trip time-of-flight between the master device and the respective target device, e.g. measuring a time-of-flight (pseudo-range) between the master device and the respective target device for both a forward and a return message. Such time-of-flight can be measured for the forward and return messages by determining a difference between respective transmit and receipt timestamps. The measured time-of-flight can be compared with a known or predetermined time-of-flight (range) between the master device and the respective target device to obtain the first time correction. The known time-of-flight between the master device and the respective target device can be based on (e.g., is known from or can be calculated from) prior known range information. The prior known range information can be obtained by measuring distances between the master and target devices, e.g. during installation or setup. Based on the prior known range information between the devices (e.g., the distances), the theoretical time-of-flight between the master and target devices can be calculated and compared to the measured time-of-flight. First messages communicated between a plurality of the target devices and the client device (transmitted from, or received by the respective target device) are timestamped by each of the plurality of the target devices with a first timestamp corrected for the first time correction of the respective target device. The position information of the client device is determined based on time-of-flight information (range or pseudo-range information) between the plurality of the target devices and the client device obtained from the first messages in which the first timestamps are corrected for the first time corrections. The position information can be determined from the range information by known methods, such as triangulation or trilateration. The first message can be transmitted from the respective target device and is received by the client device, in which case the position information can be determined based on time of arrival (ToA) of the first message. Alternatively, or in addition, the first message can be transmitted or broadcasted from the client device and received by a plurality of target devices, in which case the position information can be determined based on time difference of arrival (TDoA) of the first message at the plurality of target devices.

Methods according to the present disclosure advantageously further comprise determining for the master device a second time correction representative of a sum of the transmit antenna delay of the master device and the receive antenna delay of the master device. The second time correction can be determined based on one-way ranging messages communicated in a triangle between the master device, a first one of the target devices and a second one of the target devices. The first time correction is advantageously applied only once in the one-way ranging messages, specifically to the one-way ranging message between the first one and the second one of the target devices. A second message communicated between the master device and the client device (transmitted from, or received by the master device) is timestamped by the master device with a second timestamp corrected for the second time correction. The position information of the client device can be further determined based on time-of-flight information of the second message in which the second timestamp is corrected for the second time correction.

According to the present disclosure, a first time correction term, and optionally a second time correction term is implemented to compensate for the hardware delay or other impairments in the transmitter and receiver radios of target devices and optionally the master device of a wireless communication network. Using these corrections, complex and time-consuming synchronization techniques to synchronize the clocks of the target devices with the master clock can be dispensed with. Simple synchronization techniques can be applied instead and it will be unnecessary to calibrate for the antenna delays of these devices when synchronizing. When a position of a client device is calculated based on navigation/ranging messages communicated between the client device and different target devices, the positioning algorithm will experience a same offset error in the timestamps of the messages applied by the different target devices (which timestamps are corrected for the first time correction). As a result, the corresponding pseudo-ranges will all have the same error. Typically, positioning algorithms are insensitive to constant errors in the pseudo-ranges or can easily deal with them. As a result, an easier and less time-consuming positioning method is obtained without loss of positioning accuracy. The time correction terms can be calculated / determined (and applied) once or periodically (e.g., at predetermined time intervals) so that they correct for time varying delays or impairments (e.g., due to temperature variations, environmental influences, etc.). As a result, clock synchronization between the target devices and the master device can be made simpler.

According to a second aspect of the present disclosure, there is provided a positioning system as set out in the appended claims. The positioning system is advantageously configured to carry out the method according to the first aspect.

## Brief description of the figures

Aspects of the present disclosure will now be described in more detail with reference to the appended drawings, wherein same reference numerals illustrate same features and wherein:

Figure 1 represents schematically a positioning system according to aspects of the present disclosure;
Figure 2 represents schematically the components of a reference wireless network device operating in the system of Fig. 1;
Figure 3 represents schematically the components of a mobile wireless network device operating in the system of Fig. 1;
Figure 4 represents a ToA mode of operation for the system of Fig. 1;
Figure 5 represents a diagram illustrating propagation delays in messages sent between anchor nodes;
Figure 6 represents a diagram illustrating propagation delays in messages sent between an anchor node and a tag;
Figure 7 represents the positioning system of Fig. 1 performing a triangular two-way ranging between the master anchor node and two target anchor nodes;
Figure 8 represents a flow chart of a method according to aspects of the present disclosure.

## Description of embodiments

Aspects of the present disclosure will now be illustrated in the context of indoor positioning and navigation systems (IPNS) based on time of flight (ToF) of wireless messages between anchor nodes with known position and tags with unknown position. It will however be appreciated that the aspects described herein are equally applicable in other applications where hardware propagation delays internal to the wireless communication devices need to be estimated and compensated. As such, the present disclosure should not be construed as being limited to any specific wireless access technology. The underlying wireless technology can e.g. be sound-based, radiofrequency (RF) based, or light-based. Within each of these broader technology categories, there are numerous subcategories, and the present disclosure is equally applicable to any one of them. In the RF domain, WLAN, Bluetooth®, LoRa/LoRaWAN (long-range wide area network), LTE (Long Term Evolution), and UWB are just a few examples. In the following, aspects of the present disclosure are illustrated employing UWB wireless technology examples, but the present disclosure is not limited only to this technology.

## Definitions

Anchor node: a reference wireless network device with known position and used to determine the position of a client wireless network device, which may be mobile or moving. Each anchor node may send periodically navigation messages, including its own position, a timestamp and other control information. An anchor node may be, though need not be, positioned at a fixed location.

Master anchor node: anchor node whose clock will be used as a reference clock for the synchronization. All other anchor nodes will synchronize their clocks with the master clock. Synchronized clocks are clocks that tick with a same period, i.e. synchronized in frequency and possibly in phase. In a system, only one master anchor is advantageously allowed.

Slave anchor node: anchor node which is not a master anchor node. Slave anchor nodes will slave their clock to the master anchor node. Slave anchor nodes can be of different order of hierarchy, depending on how far the anchor node is from the master anchor:

- Slave anchor node of order 1: All slave anchor nodes in the direct transmission range of the master anchor node.
- Order 2 slave anchor node: All slave anchor nodes at strictly one hop from the master anchor. Order 2 slave anchor nodes are configured to synchronize indirectly on the master clock, via an order 1 slave anchor node.
- Order x slave anchor node: All slave anchor nodes at strictly x-1 hops from the master anchor node. Order x slave anchor nodes are configured to synchronize indirectly on the master clock, via an order x-1 slave anchor node.

Tag: a client wireless network device with (unknown) position that is to be determined. The tag may be mobile or may move relative to one or more anchor nodes.

Time-of-flight (ToF): the ToF of a message between any two network devices is the duration the message travels in the air between the transmit antenna and the receive antenna of these devices. The ToF generally does not include hardware delays in the devices.

Navigation (NAVG) message: Message sent over the wireless channel by an anchor node. This message can include the position of the anchor node, a timestamp of transmission and other control information.

Synchronization (SYNC) message: A type of navigation message that can be used for synchronization purposes.

Ranging (RANG) message: A type of navigation message that can be used for range measurement.

Blink (BLNK) message: A type of message sent by a tag when operating in TDoA mode.

Transmit Antenna Delay $\delta_{Tx}$: delay between the moment of timestamping a message at the transmitter (anchor node or tag) and the moment that the first symbol of this message is sent out by the antenna of the transmitter. This delay will be hardware dependent (i.e., will be different for each network device), can vary over time and will be influenced by environmental factors. Whenever the ToF of a message is measured based on a transmit timestamp, the transmit antenna delay will introduce an error in the measured ToF.

Receive Antenna Delay $\delta_{Rx}$: delay between the moment that the first symbol of a message reaches the antenna of the receiver (anchor node or tag) and the moment this message is timestamped for reception. This delay will be hardware dependent (i.e., will be different for each network device), can vary over time and will be influenced by environmental factors. Whenever the ToF of a message is measured based on a receive timestamp, the receive antenna delay will introduce an error in the measured ToF.

Measured ToF: The measured ToF of a message is the difference between the timestamp upon reception at the receiving node (receive timestamp) and the timestamp given by the transmitter (transmit timestamp).

Clock offset: Time difference Δt between devices running on different clocks. It will be convenient to note that devices with synchronized clocks can have a clock offset.

**Illustrative examples**

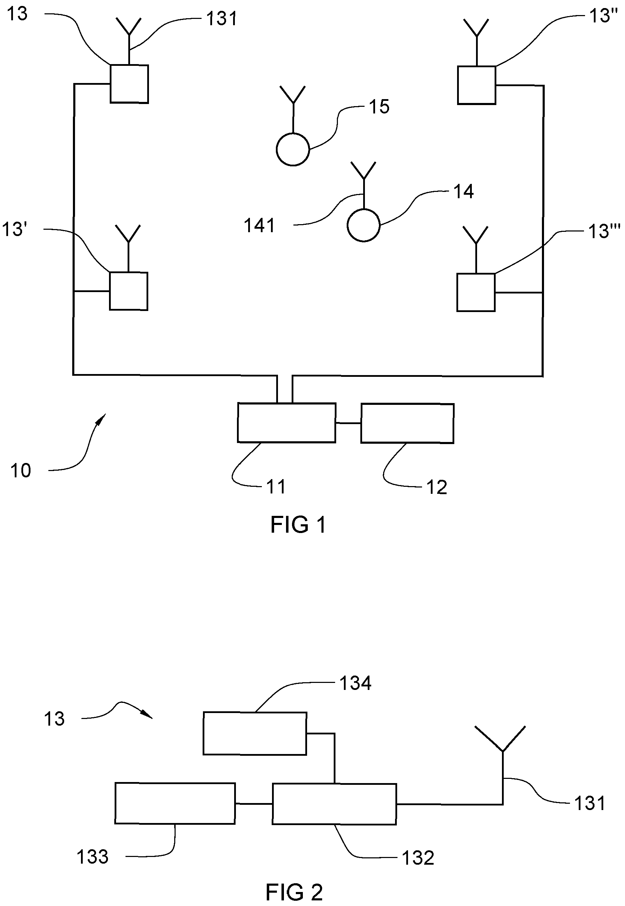

Referring to Fig. 1, a positioning system 10, which advantageously is an indoor positioning system and which may provide navigation features, comprises a wireless network controller 11 and a plurality of reference network devices 13, 13', 13", 13''' provided with respective antennas 131 enabling to transmit and/or receive messages wirelessly. In Fig. 1, the reference network devices 13-13''', hereinafter referred to as anchor nodes, are shown to be wire connected to the network controller 11, but this is not required and reference network devices 13-13''' may be configured to communicate wirelessly with network controller 11. Wireless network controller 11 can be provided as a separate device, or can alternatively be integrated in one of the anchor nodes, e.g. anchor node 13, which may act as a master for controlling wireless communication through the network.

The network controller 11 is configured for implementing a wireless network. The wireless network can be configured for signal communication through any suitable technology, such as ultrasound, infra-red, vision-based, or radio frequency (RF), such as RFID, WLAN, Bluetooth®, LoRa/LoRaWAN (long-range wide area network), LTE (Long Term Evolution) and ultra-wide band (UWB). Of these communication technologies, RF transmission, in particular UWB or WLAN, are preferred.

The wireless network controller 11 is configured to implement any suitable channel access policy for sending messages over the wireless network. By way of example, access to the wireless network (channel) is structured in a sequence of time frames, which advantageously have fixed length. At least a part of each time frame is advantageously reserved for communicating ToF (ranging) messages.

Advantageously, the anchor nodes 13-13''' are configured to both send and receive messages through the wireless network. To this end, and referring to Fig. 2, each anchor node advantageously comprises a transmitter/receiver 132 connected to the antenna 131 and to a microprocessor 133. Each anchor node advantageously comprises an internal clock 134, which is connected to the transmitter/receiver 132 allowing to timestamp transmitted and/or received messages. The internal clocks 134 of all anchor nodes 13-13‴ are advantageously synchronized by known means. By way of example, one anchor node 13 can act as a master for the clock 134, and is configured to send synchronization messages to the other anchor nodes 13'-13‴ either via the wireless network, or an optional wired network, or through any other suitable means.

Positioning system 10 further advantageously comprises a position computation unit 12. Position computation unit 12 is configured to determine a position of one or more client network devices 14, 15 based on time-of-flight (ToF) of messages that are communicated between the anchor nodes 13-13‴ and the respective client network devices 14, 15. Position computation unit 12 can be provided as a centralised computation unit, or alternatively as a distributed unit, with smaller computation units distributed over the anchor nodes 13-13‴ and/or the client network devices 14, 15.

Position computation unit 12 can store the positions of each of the anchor nodes 13-13‴. These positions can either be determined beforehand by known means, or be determined at regular intervals, in particular based on ToF of messages communicated between the anchor nodes through the wireless network.

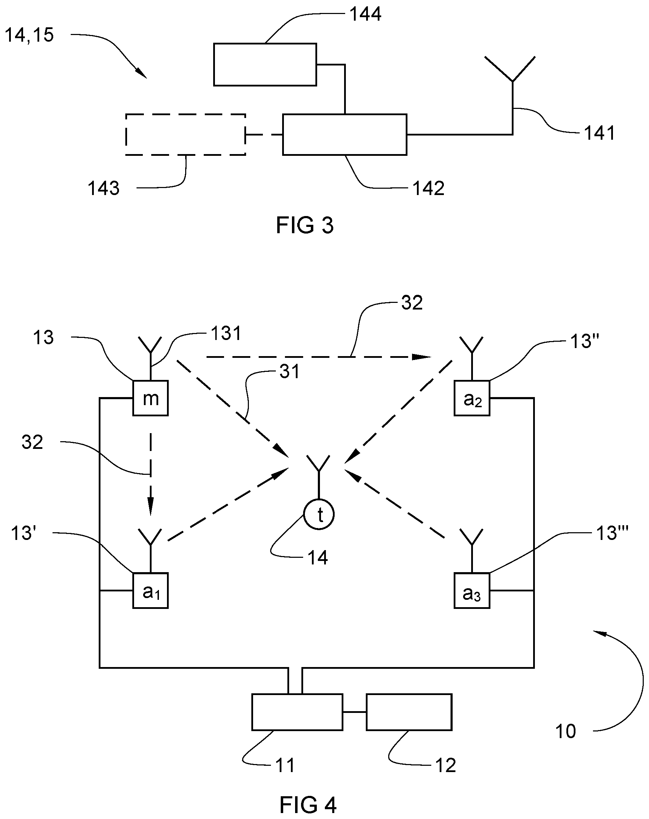

One or a plurality of client network devices 14, 15 can move around in an area covered by the wireless network. These client network devices 14, 15 will hereinafter be referred to as tags. Referring to Fig. 3, each tag 14, 15 comprises an antenna 141 and a transmitter and/or receiver unit 142. In the present examples, some tags, e.g. tag 14, may be capable of both receiving and transmitting messages through the wireless network via antenna 141, and therefore unit 142 is a transmitter and receiver (transceiver), while other tags, e.g. tag 15, may be capable of only receiving messages from the wireless network via antenna 141, and therefore unit 142 will only be a receiver unit. However, the present disclosure is not to be construed to be limited to a particular type of tag.

The tags 14, 15 each have an internal clock 144 which is connected to receiver and/or transmitter unit 142 allowing to timestamp received and/or transmitted messages. Advantageously, for some ToF positioning techniques, the internal clocks 144 of the tags 14, 15 need not be synchronized with the clocks 134 of the anchor nodes, and need not be synchronized between different tags either. The clock offset of the tag is not critical for at least some positioning techniques, such as one-way ToA. Multiple positioning algorithms can cope with a constant clock offset of the tag (i.e., a constant error in the distance towards all anchors). Mathematically, this constant clock offset is considered as an additional unknown in the set of positioning equations (together with the distances toward the anchors). Furthermore, the clock offset between the tag and the anchor nodes is often difficult to compensate for, as the mobile tag doesn't know its distance to the master, nor to the other anchors.

Optionally, each tag 14, 15 comprises a microprocessor 143 coupled to the receive and/or transmit unit 142, which may be configured to generate messages, and/or performing ToF calculations for determining the position of the tag.

The anchor nodes 13-13‴ can be mounted at fixed positions, e.g. in a building or other indoor or semi-indoor area. Alternatively, one or more of the anchor nodes can be mobile, which allows to dynamically change the coverage area of the wireless network, e.g. based on the positions of the moving tags 14, 15. In some examples, the position of the anchor nodes 13-13‴ relative to one another or the distances between the anchor nodes 13-13‴ is known, e.g. by calibration, such as by measuring the distances between the anchor nodes and calculating the theoretical time-of-flight (range) between the anchor nodes from the distances. The positions or the distances may be determined once or periodically through known techniques. As a result, the actual time of flight of messages between the anchor nodes is known.

In the following examples, one-way ToA ranging over the wireless network is considered. Referring to Fig. 4, the anchor nodes 13-13‴ will periodically send or broadcast messages 31, 32, which may be of different type and/or may be utilized for different purposes, such as navigation or ranging messages, synchronization messages, etc. Each message 31, 32 can include one or more of: an identifier of the anchor node (anchor ID), the position of the anchor node, and the transmit time (timestamp) of the message. The broadcasting of the messages can be scheduled based on any medium access control scheme (e.g., TDMA, CSMA (Carrier Sense Multiple Access) and CDMA).

The positioning system 10 can comprise a master m, which can be one of the anchor nodes 13-13‴ or a different network device, e.g. network controller 11. In the example of Fig. 4, anchor node 13 acts as a master m. Other anchor nodes 13'-13‴ within communication range of the master m are target anchor nodes $a_1$-$a_3$. A wireless network may comprise multiple masters, each being associated with one or more target anchor nodes. In addition, or alternatively, a cascaded or hierarchical structure is possible. The target anchor nodes $a_1$-$a_3$ need to synchronize their clocks 134 with the clock of the master m. To this end, master anchor m can broadcast synchronization messages 32 which are received by the target anchor nodes $a_1$-$a_3$.

The synchronization message 32 is timestamped for transmission by the master m. A target anchor node $a_1$-$a_3$ that wants to synchronize its clock with the clock of the master anchor node m, timestamps the reception of the synchronization message 32. The target anchor nodes 13'-13‴ can be configured to compensate for a clock offset of their clock 134 based on the synchronization messages received from the master m, e.g. based on the transmission (Tx) and reception (Rx) timestamps of the messages. Any suitable synchronization message can be used for this purpose. The synchronization message 32 can be a navigation message 31 broadcast by the master anchor m and received by the target anchor nodes $a_1$-$a_3$ as well as the tag 14. The time of flight (ToF) of messages sent between the master m and a

target anchor node $a_1$-$a_3$ over the wireless network will be referred to as $ToF_{m,ai}$ with $a_i$, i=1-3 representing the anchor nodes $a_1$-$a_3$. The $ToF_{m,ai}$ is representative of the distance between the master anchor m and target anchor node $a_i$.

The target anchor nodes $a_1$-$a_3$, and possibly also the master anchor node m, are configured to broadcast navigation messages 31 which are received by the tags 14. The navigation messages 31 are timestamped for transmission by the respective anchor node m, $a_1$-$a_3$. A tag t (14) timestamps the navigation messages 31 at reception. With navigation messages received from enough anchors, the distance of the tag relative to the respective anchors can be calculated based on the one-way ToF (difference of timestamps) of these messages. The ToF of a message 31 sent between an anchor node m, $a_1$-$a_3$ and a tag t over the wireless network will be referred to as $ToF_{m,t}$ for master anchor node m and $ToF_{ai,t}$ with $a_i$, i=1-3 representing the target anchor nodes $a_1$-$a_3$. The tag's position can be determined locally, at tag level, or centrally, at system level (e.g., in position computation unit 12). In this sense, the described systems can be seen as a terrestrial GPS-like system of positioning where a tag will only receive ranging messages, without sending.

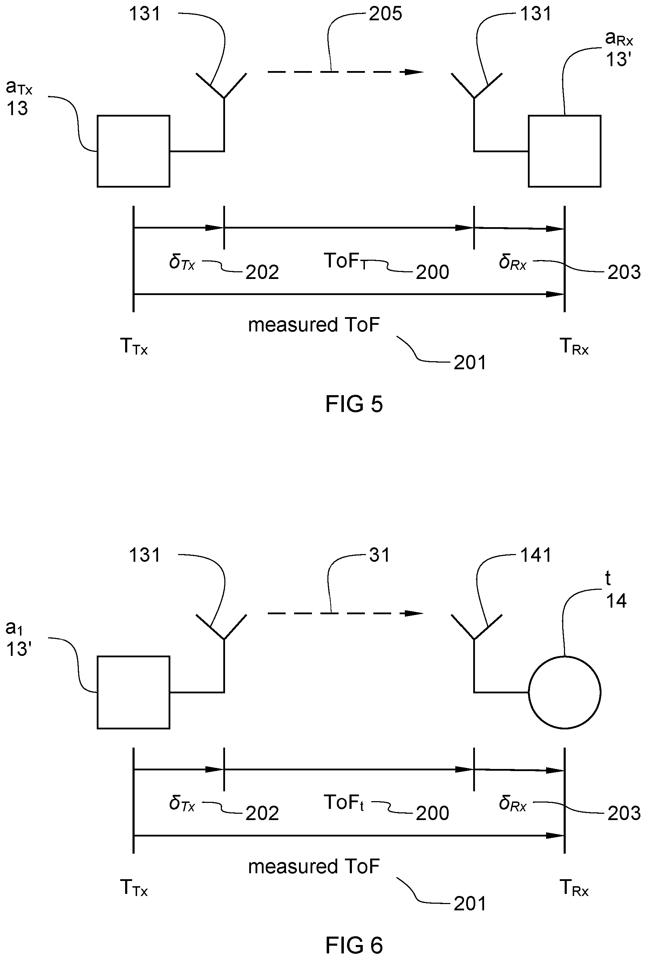

Referring to Fig. 5, when a message 205 is transmitted from a transmitter anchor node $a_{Tx}$, e.g. master node m, and received by a receiver anchor node $a_{Rx}$, e.g. target anchor node $a_1$, the difference between the transmission timestamp $T_{Tx}$ and the reception timestamp $T_{Rx}$ of the message 205 is referred to as the measured ToF 201. The measured ToF 201 comprises the transmit antenna delay $\delta_{Tx}$ 202, the receive antenna delay $\delta_{Rx}$ 203 and the actual time of flight $ToF_T$ 200 between the antennas 131 of the transmitter anchor node $a_{Tx}$ and the receiver anchor node $a_{Rx}$, i.e.:

$$\text{Measured ToF} = T_{Rx} - T_{Tx} = \delta_{Tx} + ToF_T + \delta_{Rx} \qquad (1)$$

wherein $ToF_T$ refers to the time that a message travels from the antenna of $a_{Tx}$ to the antenna of $a_{Rx}$.

To perform accurate one-way ToF measurements, the time difference between the clocks of the anchor nodes broadcasting navigation messages 31 (clock offset) needs to be as small as possible (1 ns error in ToF measurement can correspond to about 33 cm error in the distance accuracy). According to an aspect of the present disclosure, the clocks of the anchor nodes are synchronized from one-way exchange of messages between the master node m and the target anchor $a_i$. In one possible synchronization technique, a target anchor finds the master time by looking to the transmit timestamp $T_{Tx}$ of a message 205 transmitted by the master, adds to this time the actual ToF ($ToF_T$) 200 of the navigation message and compares this to the local time of the target anchor. This approach assumes that the distance and hence the actual ToF ($ToF_T$) of the navigation message 205 between the master m and the target anchor $a_i$ is known, e.g. by calibration, yet provides an easy way of synchronizing clocks. Following this reasoning, there will be a residual clock offset between the clock of any target anchor $a_i$ and the master m equal to:

$$\Delta_{m,a_i} = \delta_{Tx,m} + \delta_{Rx,a_i} \qquad (2),$$

i.e., the sum of the transmit antenna delay 202 of the master ($\delta_{Tx,m}$) and the receive antenna delay 203 of the target anchor node $a_i$ ($\delta_{Rx,ai}$). In other words, the time of target anchor node $a_i$ will be behind the master time with $\Delta_{m,a_i}$ as expressed in Eq. (2). A target anchor node can therefore compensate for the known actual $ToF_T$ (which may be known when the positions of the target anchor nodes relative to the master node are known), but not for the antenna delays 202 and 203 as they are unknown for the target anchor nodes. Furthermore, the antenna delays may vary over time and may vary due to environmental influences.

In the present disclosure, a method is provided to easily compensate for the clock offset between the target anchor nodes $a_i$ and the master m which is due to the internal hardware propagation delays. According to aspects of the present disclosure, time correction terms are utilized to compensate for the hardware delay or other impairments in the transmitter and receiver of the radio of the anchor nodes. The corrections can be calculated and applied once or periodically so that they correct for time varying delays or impairments (e.g., due to the temperature variations, environmental influences, etc.).

A first time correction term $C_i$ is associated with a target anchor node $a_i$ and consists of the sum of the transmit antenna delay of the target anchor node $a_i$, $\delta_{Tx,a_i}$, the transmit antenna delay of the master m, $\delta_{Tx,m}$, the receive antenna delay of the target anchor node $a_i$, $\delta_{Rx,ai}$, and the receive antenna delay of the master m, $\delta_{Rx,m}$:

$$C_i = \delta_{Tx,m} + \delta_{Rx,m} + \delta_{Tx,a_i} + \delta_{Rx,a_i} \qquad (3).$$

$C_i$ hence corresponds with the sum of all transmit and receive antenna delays of the master and the respective anchor node $a_i$. Although the individual antenna delays are unknown, the first time correction term $C_i$ can be easily measured by e.g., performing a two-way ranging between the target anchor $a_i$ and the master m and compare the measured distance (or ToF) with the real (known) distance (or ToF) for both the forward and the return messages. The first time correction term $C_i$ can be determined for each target anchor node $a_i$.

A target anchor node $a_i$ can apply the first correction term $C_i$ to its own time. By way of example, the target anchor

node $a_i$ adjusts its internal clock 134 based on $C_i$. Alternatively, the first time correction term $C_i$ is added to the timestamp of a navigation message 31 by the target anchor node $a_i$. It will be convenient to note that before the application of the first correction term, the target anchor time will lag behind the master time with a time offset $\Delta_{m,a_i}$ as expressed in Eq. (2). When applying the first correction term $C_i$, the clock of the target anchor node $a_i$ (or its timestamp) will have a residual error with respect to the master time by:

$$\hat{\Delta}_{m,a_i} = -\delta_{Rx,m} - \delta_{Tx,a_i} \qquad (4),$$

wherein $\hat{\Delta}$ indicates the clock offset after applying the correction term of Eq. (3) and the negative delays indicate that the target anchor time is ahead of the master time.

Referring to Fig. 6, if target anchor node $a_1$ sends out a navigation message 31, with its timestamp corrected by $C_1$ ($C_i$ where i=1), the navigation message will inevitably be delayed by the unknown transmit antenna delay 202 of the target anchor node $\delta_{Tx,a_1}$. The error in the timestamp of the target anchor node (clock offset) with respect to the master time will be equal to $\hat{\Delta}_{Tx,a_1} = \hat{\Delta}_{m,a_1} + \delta_{Tx,a_1} = -\delta_{Rx,m}$, i.e., the receive antenna delay of the master m. This remaining error $-\delta_{Rx,m}$ is independent of the target anchor node $a_i$. This means that if another target anchor node $a_j$ applies its associated correction term $C_j$, the remaining error in the timestamp of a navigation message broadcast by $a_j$ also equals $-\delta_{Rx,m}$.

When a position of tag t is calculated using navigation messages 31 of different target anchor nodes, the position calculation algorithm will experience the same offset error in the transmit timestamps of the messages. As already mentioned, many positioning algorithms are insensitive to constant errors in the measured time-of-flight, and by using the first correction term $C_i$, the antenna delays of the different target anchor nodes can be compensated for.

In case the master m is an anchor node 13 which is also transmitting navigation messages, a second time correction term $C_m$, can be constructed for use with navigation messages broadcast by the master anchor node 13. The second time correction term $C_m$ equals the sum of the transmit and receive antenna delays of the master:

$$C_m = \delta_{Tx,m} + \delta_{Rx,m} \qquad (5).$$

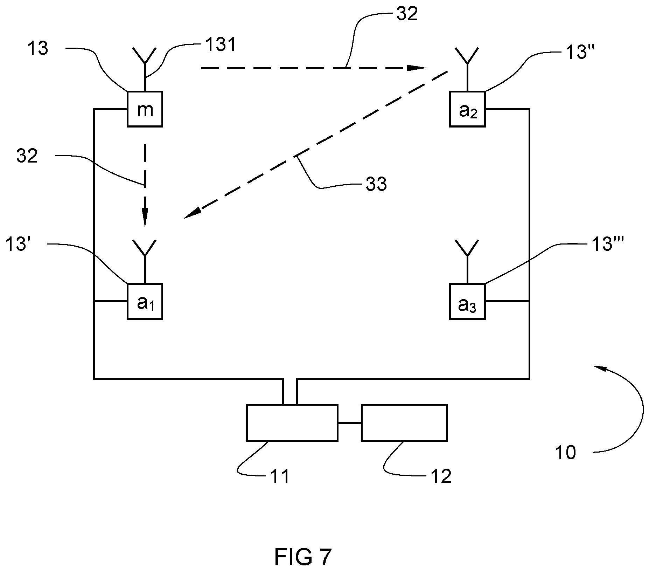

$C_m$ can be determined in various ways. Referring to Fig. 7, one possible method is to use the first correction term $C_i$ as defined in Eq. (3) in a triangle between the master m and two target anchor nodes, e.g. $a_1$ and $a_2$. Target anchor node $a_2$ (13") sends out message 33 with transmit timestamp corrected by its associated first correction term $C_2$ ($C_i$ where i=2, Eq. (3)). Target anchor node $a_1$ at this point will not apply any correction to its own clock. The residual timing error in the ToF of message 33 received by anchor node 13' ($a_1$) hence will be:

$$\hat{\Delta}_{m,a_2} + \delta_{Tx,a_2} + \delta_{Rx,a_1} = \delta_{Rx,a_1} - \delta_{Rx,m}, \qquad (6)$$

where $\hat{\Delta}_{m,a_2}$ is as defined in Eq. (4) with i=2. Master anchor m sends out message 32 with uncorrected transmit timestamp. Message 32 is received by target anchor node $a_1$ which also does not apply any correction to its clock. The timing error in the ToF of message 32 received by target anchor node $a_1$ hence is:

$$\delta_{Tx,m} + \delta_{Rx,a_1}. \qquad (7)$$

Assuming the positions of the master and target anchors relative to one another are known (and hence the actual $ToF_T$ is known), the second correction term $C_m$ can be obtained by subtracting the residual timing error (6) from the timing error (7).

Referring again to Fig. 4, the master anchor m can send out a navigation message 31 with the transmit timestamp corrected by the second time correction term $C_m$ as expressed in Eq. (5). Particularly, $C_m$ is added to the master time at timestamping of message 31. The transmission of the message will inevitably be delayed by the unknown transmit antenna delay 202 of the master anchor node, $\delta_{Tx,m}$. The error in the transmit timestamp will hence be equal to $\hat{\Delta}_{Tx,,m} = -C_m + \delta_{Tx,m} = -\delta_{Rx,m}$, i.e. the receive antenna delay of the master. It will be appreciated that the error $\hat{\Delta}_{Tx,m} = -\delta_{Rx,m}$ is the same as the error $\hat{\Delta}_{Tx,a_i}$ in the transmit timestamp of navigation messages sent out by the target anchor nodes. As a result, a tag t can utilize the ToF measurements of both the target anchor nodes and the master anchor node for determining its position without difficulty.

The second correction term is advantageously applied exclusively to timestamps by the master anchor node, while the first correction term can be applied exclusively to timestamps by the respective target anchor node. It will be appreciated that the time correction terms as described herein can be complemented with other suitable correction terms to compensate for other possible communication delays.

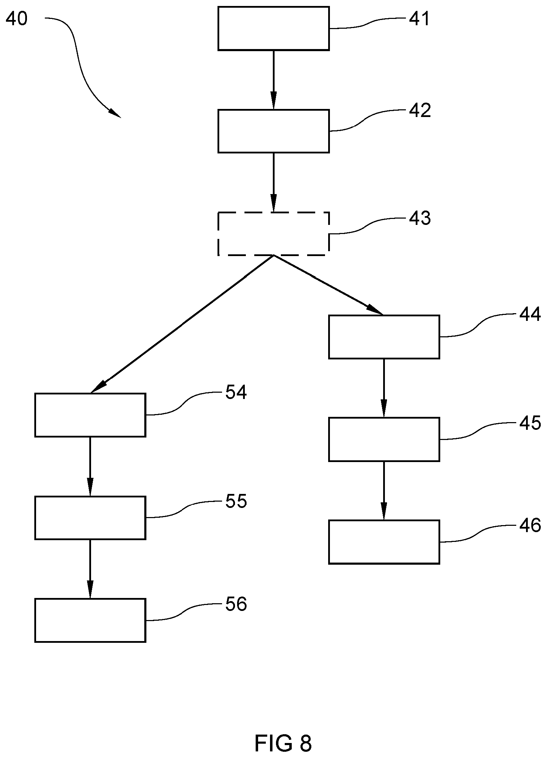

Referring to Fig. 8, a method 40 for operating the positioning system 10 according to aspects of the present disclosure can comprise one or more initializing operations 41 in which the different anchor nodes 13-13''' and possibly the tags 14, 15 receive the communication structure from wireless network controller 11. In particular, they can receive information relating to the time frame structure and possibly information relating to when each of the anchor node and each of the tag is allowed to transmit messages over the wireless network. The initialisation operations 41 can additionally, or alternatively comprise synchronization operations for synchronizing the anchor nodes and possibly the tags. This may include the anchor nodes and/or tags receiving synchronization parameters and receiving and/or sending synchronization messages. By way of example the master anchor node 13 can transmit first synchronization messages allowing target anchor nodes 13'-13‴ to synchronize their clocks 134 with the master clock. Advantageously, synchronization is performed based on one-way messages from the master to the target anchors. One or more initialisation operations 41 can be carried out at regular time intervals.

One initialization operation 41 can comprise determining an actual time of flight ($ToF_T$) of a message between the anchor nodes 13-13‴. This operation can comprise determining positions of the anchor nodes 13-13‴ relative to one another, e.g. by calibration, and determining the $ToF_T$ from the positions.

In operation 42, first time correction terms (Eq. (3)) are determined for each of the target anchor nodes. Operation 42 can include sending two-way ranging messages between the master anchor node 13 and each of the target anchor nodes 13'-13‴ to determine the first correction term for the respective target anchor node based on a ToF positioning technique, e.g. ToA. Operation 42 can include adjusting the clocks of the target anchor nodes by the respective first time correction term. Particularly, the first time correction term can be added to the clock time of the respective target anchor node. The clock time of the target anchor node hence will be ahead of the master clock time. Alternatively, or in addition, the first time correction term can be stored in readable memory of the respective target anchor node, e.g. memory coupled to microprocessor 133. The target anchor node can add the respective first time correction to the time of each timestamp and timestamp a navigation message with the adjusted timestamp.

In an optional operation 43, a second time correction term (Eq. (5)) is determined for the master anchor. Operation 43 can include a target anchor $a_1$ determining the second time correction term based on one-way ToF information from messages received from the master anchor and another target anchor $a_2$, where both target anchors have been prior synchronized with the same master m.

In operation 44, navigation messages 31 are sent out by the target anchor nodes 13'-13‴, and possibly by the master anchor node 13 as well. The navigation messages comprise a transmit timestamp applied by the respective anchor node which is corrected for the first time correction or the second time correction, respectively.

In operation 45, the tag 14 acts as a wireless receiver and the navigation messages 31 are received by the tag 14 and are receipt timestamped by the tag. The tag 14 can apply its internal clock time for timestamping the navigation messages. The clock of the tag can be synchronized with the master clock, although a bias or offset can be tolerated.

In operation 46, a position of the tag 14 with respect to the anchor nodes 13-13‴ is determined, either locally (e.g. by the tag microprocessor 143), or centrally (computing unit 12). The position is determined based on the transmit and receipt timestamps of the navigation messages 31, in which the timestamps by the anchor nodes are corrected for the respective first or second time correction terms.

In an alternative method, the sequence of operations 44-46 is replaced with operations 54-56, in which the positioning system operates according to a TDoA positioning method. It will be convenient to note that the tag need not be synchronized for operating in TDoA mode. In operation 54, the tag 14 sends a blink message comprising tag identification information and possibly timestamp and other information.

In operation 55, the blink messages are received by the target anchor nodes 13'-13‴, and possibly the master anchor node 13. Each anchor node timestamps the blink message upon reception. The receipt timestamp is corrected by the respective first or second time correction term. In operation 56, the information is forwarded to the position computation unit 12, which determines the position of the tag 14 from the different arrival times (receipt timestamps) of the blink message at a plurality of anchor nodes. The first and second correction terms as expressed in Eq. (3) and (5) can hence be utilized analogously for determining the position of a tag through TDoA methods.

Positioning systems according to the present disclosure can combine both ToA and TDoA positioning methods. By way of example, some tags 14 may operate through ToA and other tags 15 may operate through TDoA. A possible implementation is described in WO 2021/148415.

**Claims**

1. Method of determining position information of a client device (14), wherein the client device (14) and a plurality of reference devices (13-13‴) communicate with one another over a wireless communication network,

   wherein the plurality of reference devices comprise a master device (13) and target devices (13'-13‴), wherein clocks (134) of the target devices are synchronized with a clock of the master device based on one-way message information, such that a residual clock offset between the clocks of the target devices and the clock of the master device is obtained representative of a sum of a transmit antenna delay (202) of the master device and a receive antenna delay (203) of the respective target device,

the method comprising:

determining for each of the target devices (13'-13''') a first time correction representative of a sum of a transmit antenna delay (202) of the respective target device, a transmit antenna delay of the master device, a receive antenna delay (203) of the respective target device and a receive antenna delay of the master device, wherein the first time correction is determined based on performing a two-way ranging between the master device and the respective target device and on comparing a measured time-of-flight with a predetermined time-of-flight calculated based on a known distance between the master device and the respective target device for both a forward and a return message,

timestamping, by each of a plurality of the target devices, a first message (31) transmitted from, or received by the respective target device with a first timestamp corrected for the first time correction, and

determining the position information of the client device based on time-of-flight information of the first messages utilizing the first timestamp corrected for the first time correction.

2. Method of claim 1, wherein the first message is transmitted from the respective target device and is received by the client device.

3. Method of claim 1 or 2, further comprising:

determining for the master device (13) a second time correction representative of a sum of the transmit antenna delay of the master device and the receive antenna delay of the master device, wherein the second time correction is determined based on one-way ranging messages in a triangle between the master device (13), a first one of the target devices (13') and a second one of the target devices (13"), in which the first time correction is applied only once to the one-way ranging message between the first one and the second one of the target devices, timestamping, by the master device, a second message transmitted from, or received by the master device with a second timestamp corrected for the second time correction, and

determining the position information of the client device further based on time-of-flight information of the second message utilizing the second timestamp corrected for the second time correction.

4. Method of claim 3, wherein the second message is transmitted from the master device and is received by the client device.

5. Method of any one of the preceding claims, wherein the clocks of the target devices are offset by the first time correction such that the first timestamp is automatically corrected for the first time correction.

6. Method of any one of the preceding claims, wherein determining the position information of the client device is based on a time of flight position computation method selected from the group consisting of: one-way Time of arrival, Time difference of arrival, Two-way ranging and Symmetrical double-sided two-way ranging.

7. Method of claim 6, wherein determining the position information of the client device is based on one-way time of arrival ranging messages

8. Method of any one of the preceding claims, wherein the first message is broadcast by the respective target device, preferably wherein the first message is a one-way time of arrival ranging message.

9. Method of any one of the preceding claims, wherein the client device and the plurality of reference devices communicate over the wireless communication network through ultra wideband signals.

10. Method of any one of the preceding claims, wherein the clocks of the target devices are synchronized with the clock of the master device through the wireless communication network.

11. Method of any one of the preceding claims, wherein the first time correction is determined for each of the target devices (13'-13''') periodically, optionally wherein the second time correction is determined periodically.

12. Method of any one of the preceding claims, wherein the first timestamp corrected for the first time correction results in a residual time-of-flight offset error which is independent of the target devices.

13. Method of claim 12, wherein determining the position information of the client device comprises compensating for the residual times-of-flight offset error as a constant error.

14. Method of any one of the preceding claims, wherein the clocks (134) of the target devices (13') are synchronized with the clock of the master device (13) based on comparing a local time of the respective target device with a transmit timestamp ($T_{Tx}$) from the master device added with a known actual time-of-flight (200) of a one-way message (205) from the master device to the respective target device.

15. Method of any one of the preceding claims, wherein the wireless communication network is accessed by the client device and the plurality of reference devices according to a time division multiple access scheme.

16. Method of any one of the preceding claims, wherein at least a portion of the plurality of reference devices are arranged indoor, preferably in a fixed location relative to a building.

17. Positioning system (10), comprising:

a plurality of reference network devices (13) comprising a master device and target devices, wherein clocks of the target devices are configured to be synchronized with a clock of the master device,
a wireless communication unit (11), wherein the wireless communication unit is configured to establish a wireless communication network allowing for communicating with a client device (14, 15),
a processing unit configured to determine a position information of the client device,
wherein the positioning system is configured to carry out the method of any one of the preceding claims.

**Patentansprüche**

1. Verfahren zum Bestimmen von Positionsinformationen einer Client-Vorrichtung (14), wobei die Client-Vorrichtung (14) und eine Vielzahl von Referenzvorrichtungen (13-13''') über ein drahtloses Kommunikationsnetz miteinander kommunizieren,

wobei die Vielzahl von Referenzvorrichtungen eine Master-Vorrichtung (13) und Zielvorrichtungen (13'-13''') umfasst, wobei Taktgeber (134) der Zielvorrichtungen mit einem Taktgeber der Master-Vorrichtung basierend auf Einweg-Nachrichteninformationen synchronisiert werden, sodass ein Rest-Takt-Offset zwischen den Taktgebern der Zielvorrichtungen und dem Taktgeber der Master-Vorrichtung erlangt wird, der repräsentativ für eine Summe einer Sendeantennenverzögerung (202) der Master-Vorrichtung und einer Empfangsantennenverzögerung (203) der jeweiligen Zielvorrichtung ist,
das Verfahren umfassend:

Bestimmen, für jede der Zielvorrichtungen (13'-13'''), einer ersten Zeitkorrektur, die repräsentativ für eine Summe einer Sendeantennenverzögerung (202) der jeweiligen Zielvorrichtung, einer Sendeantennenverzögerung der Master-Vorrichtung, einer Empfangsantennenverzögerung (203) der jeweiligen Zielvorrichtung und einer Empfangsantennenverzögerung der Master-Vorrichtung ist, wobei die erste Zeitkorrektur basierend auf der Durchführung einer Zweiweg-Entfernungsmessung zwischen der Master-Vorrichtung und der jeweiligen Zielvorrichtung und auf dem Vergleich einer gemessenen Flugzeit mit einer basierend auf einer bekannten Entfernung zwischen der Master-Vorrichtung und der jeweiligen Zielvorrichtung berechneten vorbestimmten Flugzeit, sowohl für eine Vorwärts- als auch für eine Rückwärtsnachricht, bestimmt wird, Zeitstempeln, durch jede der Vielzahl von Zielvorrichtungen, einer ersten Nachricht (31), die von der jeweiligen Zielvorrichtung gesendet oder empfangen wird, mit einem ersten Zeitstempel, korrigiert um die erste Zeitkorrektur, und
Bestimmen der Positionsinformationen der Client-Vorrichtung basierend auf den Flugzeitinformationen der ersten Nachrichten unter Verwendung des ersten Zeitstempels, korrigiert um die erste Zeitkorrektur.

2. Verfahren nach Anspruch 1, wobei die erste Nachricht von der jeweiligen Zielvorrichtung gesendet und von dem Client-Vorrichtung empfangen wird.

3. Verfahren nach Anspruch 1 oder 2, ferner umfassend:

Bestimmen einer zweiten Zeitkorrektur für die eine Summe der Sendeantennenverzögerung der Master-Vorrichtung und der Empfangsantennenverzögerung der Master-Vorrichtung repräsentierenden Master-Vorrichtung (13), wobei die zweite Zeitkorrektur basierend auf Einweg-Entfernungsmessungsnachrichten in einem Dreieck zwischen der Master-Vorrichtung (13), einer ersten der Zielvorrichtungen (13') und einer zweiten der Zielvorrichtungen (13") bestimmt wird, wobei die erste Zeitkorrektur nur einmal auf die Einweg-Entfernungsmessungsnachricht zwischen der ersten und der zweiten der Zielvorrichtungen angewendet wird,
Zeitstempeln, durch die Master-Vorrichtung, einer zweiten von der Master-Vorrichtung gesendeten oder empfangenen Nachricht mit einem zweiten Zeitstempel, korrigiert um die zweite Zeitkorrektur, und
Bestimmen der Positionsinformationen der Client-Vorrichtung ferner basierend auf Flugzeitinformationen der zweiten Nachricht unter Verwendung des zweiten Zeitstempels, korrigiert um die zweite Zeitkorrektur.

4. Verfahren nach Anspruch 3, wobei die zweite Nachricht von der Master-Vorrichtung gesendet und von der Client-Vorrichtung empfangen wird.

5. Verfahren nach irgendeinem der vorherigen Ansprüche, wobei die Taktgeber der Zielvorrichtungen um die erste Zeitkorrektur versetzt sind, sodass der erste Zeitstempel automatisch um die erste Zeitkorrektur korrigiert wird.

6. Verfahren nach irgendeinem der vorherigen Ansprüche, wobei ein Bestimmen der Positionsinformationen der Client-Vorrichtung auf einem Verfahren zur Berechnung der Flugzeitposition basiert, das ausgewählt ist aus der Gruppe, bestehend aus: Einweg-Ankunftszeit, Ankunftszeitdifferenz, Zweiweg-Entfernungsmessung und symmetrische zweiseitige Zweiweg-Entfernungsmessung.

7. Verfahren nach Anspruch 6, wobei ein Bestimmen der Positionsinformationen der Client-Vorrichtung auf Einweg-Ankunftszeit-Entfernungsnachrichten basiert ist.

8. Verfahren nach irgendeinem der vorherigen Ansprüche, wobei die erste Nachricht von der jeweiligen Zielvorrichtung gesendet wird, wobei die erste Nachricht vorzugsweise eine Einweg-Ankunftszeit-Entfernungsnachricht ist.

9. Verfahren nach irgendeinem der vorherigen Ansprüche, wobei die Client-Vorrichtung und die Vielzahl von Referenzvorrichtungen über Ultrabreitbandsignale über das drahtlose Kommunikationsnetz kommunizieren.

10. Verfahren nach irgendeinem der vorherigen Ansprüche, wobei die Taktgeber der Zielvorrichtungen über das drahtlose Kommunikationsnetz mit dem Taktgeber der Master-Vorrichtung synchronisiert werden.

11. Verfahren nach irgendeinem der vorherigen Ansprüche, wobei die erste Zeitkorrektur für jede der Zielvorrichtungen (13'-13"') periodisch bestimmt wird, optional wobei die zweite Zeitkorrektur periodisch bestimmt wird.

12. Verfahren nach irgendeinem der vorherigen Ansprüche, wobei der um die erste Zeitkorrektur korrigierte erste Zeitstempel in einem Restflugzeit-Offsetfehler, der von den Zielvorrichtungen unabhängig ist, resultiert.

13. Verfahren nach Anspruch 12, wobei ein Bestimmen der Positionsinformationen der Client-Vorrichtung ein Kompensieren des Restflugzeit-Offsetfehlers als konstanten Fehler umfasst.

14. Verfahren nach irgendeinem der vorherigen Ansprüche, wobei die Taktgeber (134) der Zielvorrichtungen (13') basierend auf dem Vergleich einer lokalen Zeit der jeweiligen Zielvorrichtung mit einem Sendezeitstempel ($T_{Tx}$) von der Master-Vorrichtung, der mit einer bekannten tatsächlichen Flugzeit (200) einer Einwegnachricht (205) von der Master-Vorrichtung zu der jeweiligen Zielvorrichtung addiert wird, mit dem Taktgeber der Master-Vorrichtung (13) synchronisiert werden.

15. Verfahren nach irgendeinem der vorherigen Ansprüche, wobei die Client-Vorrichtung und die Vielzahl von Referenzvorrichtungen gemäß einem Zeitmultiplex-Vielfachzugriffsschema auf das drahtlose Kommunikationsnetz zugreifen.

16. Verfahren nach irgendeinem der vorherigen Ansprüche, wobei zumindest ein Teil der Vielzahl von Referenzvorrichtungen in Innenräumen, vorzugsweise an einem festen Ort in Bezug auf ein Gebäude, angeordnet ist.

17. Positionierungssystem (10), umfassend:

eine Vielzahl von Referenznetzvorrichtungen (13), umfassend eine Master-Vorrichtung und Zielvorrichtungen, wobei Taktgeber der Zielvorrichtungen konfiguriert sind, um mit einem Taktgeber der Master-Vorrichtung synchronisiert zu werden,
eine drahtlose Kommunikationseinheit (11), wobei die drahtlose Kommunikationseinheit konfiguriert ist, um ein drahtloses Kommunikationsnetzwerk, das eine Kommunikation mit einer Client-Vorrichtung (14, 15) ermöglicht, aufzubauen,
eine Verarbeitungseinheit, die konfiguriert ist, um Positionsinformationen der Client-Vorrichtung zu bestimmen, wobei das Positionierungssystem konfiguriert ist, um das Verfahren nach irgendeinem der vorherigen Ansprüche durchzuführen.

**Revendications**

1. Procédé de détermination d'informations de position d'un dispositif client (14), dans lequel le dispositif client (14) et une pluralité de dispositifs de référence (13-13''') communiquent entre eux sur un réseau de communication sans fil,

dans lequel la pluralité de dispositifs de référence comprend un dispositif maître (13) et des dispositifs cibles (13'-13'''), dans lequel des horloges (134) des dispositifs cibles sont synchronisées avec une horloge du dispositif maître sur la base d'informations de message à sens unique, de sorte qu'un décalage d'horloge résiduel entre les horloges des dispositifs cibles et l'horloge du dispositif maître est obtenu, lequel est représentatif d'une somme d'un retard d'antenne d'émission (202) du dispositif maître et d'un retard d'antenne de réception (203) du dispositif cible respectif,
le procédé comprenant le fait de :

déterminer, pour chacun des dispositifs cibles (13'-13'''), une première correction de temps représentative d'une somme d'un retard d'antenne d'émission (202) du dispositif cible respectif, d'un retard d'antenne d'émission du dispositif maître, d'un retard d'antenne de réception (203) du dispositif cible respectif et d'un retard d'antenne de réception du dispositif maître, dans laquelle la première correction de temps est déterminée sur la base de la réalisation d'une mesure de distance à double sens entre le dispositif maître et le dispositif cible respectif et de la comparaison d'un temps de vol mesuré à un temps de vol prédéterminé calculé sur la base d'une distance connue entre le dispositif maître et le dispositif cible respectif à la fois pour un message aller et pour un message retour,
horodater, par chacun d'une pluralité de dispositifs cibles, un premier message (31) transmis à partir du dispositif cible respectif, ou reçu par le dispositif cible respectif, avec un premier horodatage corrigé pour la première correction de temps, et
déterminer les informations de position du dispositif client, sur la base d'informations de temps de vol du premier message, en utilisant le premier horodatage corrigé pour la première correction de temps.

2. Procédé selon la revendication 1, dans lequel le premier message est transmis à partir du dispositif cible respectif et est reçu par le dispositif client.

3. Procédé selon la revendication 1 ou 2, comprenant en outre le fait de :

déterminer, pour le dispositif maître (13), une deuxième correction de temps représentative d'une somme du retard d'antenne d'émission du dispositif maître et du retard d'antenne de réception du dispositif maître, dans laquelle la deuxième correction de temps est déterminée sur la base de messages de mesure de distance à sens unique dans un triangle entre le dispositif maître (13), un premier des dispositifs cibles (13') et un deuxième des dispositifs cibles (13"), dans laquelle la première correction de temps n'est appliquée qu'une seule fois au message de mesure de distance à sens unique entre le premier et le deuxième des dispositifs cibles,
horodater, par le biais du dispositif maître, un deuxième message transmis à partir dispositif maître, ou reçu par le dispositif maître, avec un deuxième horodatage corrigé pour la deuxième correction de temps, et
déterminer les informations de position du dispositif client, en outre sur la base d'informations de temps de vol du deuxième message, en utilisant le deuxième horodatage corrigé pour la deuxième correction de temps.

4. Procédé selon la revendication 3, dans lequel le deuxième message est transmis à partir du dispositif maître et est reçu par le dispositif client.

5. Procédé selon l'une quelconque des revendications précédentes, dans lequel les horloges des dispositifs cibles sont décalées de la première correction de temps, de sorte que le premier horodatage est automatiquement corrigé pour la première correction de temps.

**6.** Procédé selon l'une quelconque des revendications précédentes, dans lequel la détermination des informations de position du dispositif client est basée sur un procédé de calcul de position par temps de vol choisi dans le groupe comprenant : un temps d'arrivée à sens unique, une différence de temps d'arrivée, une mesure de distance à double sens et une mesure de distance à double sens symétrique.

**7.** Procédé selon la revendication 6, dans lequel la détermination des informations de position du dispositif client est basée sur des messages de mesure de distance par temps d'arrivée à sens unique.

**8.** Procédé selon l'une quelconque des revendications précédentes, dans lequel le premier message est diffusé en continu par le dispositif cible respectif, de préférence dans lequel le premier message est un message de mesure de distance par temps d'arrivée à sens unique.

**9.** Procédé selon l'une quelconque des revendications précédentes, dans lequel le dispositif client et la pluralité de dispositifs de référence communiquent sur le réseau de communication sans fil par le biais de signaux à bande ultra-large.

**10.** Procédé selon l'une quelconque des revendications précédentes, dans lequel les horloges des dispositifs cibles sont synchronisées avec l'horloge du dispositif maître par l'intermédiaire du réseau de communication sans fil.

**11.** Procédé selon l'une quelconque des revendications précédentes, dans lequel la première correction de temps est déterminée pour chacun des dispositifs cibles (13'-13''') périodiquement, éventuellement dans lequel la deuxième correction de temps est déterminée périodiquement.

**12.** Procédé selon l'une quelconque des revendications précédentes, dans lequel le premier horodatage corrigé pour la première correction de temps donne lieu à une erreur de décalage de temps de vol résiduel qui est indépendante des dispositifs cibles.

**13.** Procédé selon la revendication 12, dans lequel la détermination des informations de position du dispositif client comprend la compensation de l'erreur de décalage de temps de vol résiduel en tant qu'une erreur constante.

**14.** Procédé selon l'une quelconque des revendications précédentes, dans lequel les horloges (134) des dispositifs cibles (13') sont synchronisées avec l'horloge du dispositif maître (13) sur la base d'une comparaison d'une heure locale du dispositif cible respectif avec un horodatage d'émission ($T_{Tx}$) provenant du dispositif maître, additionné d'un temps de vol réel connu (200) d'un message unidirectionnel (205) du dispositif maître au dispositif cible respectif.

**15.** Procédé selon l'une quelconque des revendications précédentes, dans lequel le réseau de communication sans fil est accessible par le dispositif client et la pluralité de dispositifs de référence selon un schéma d'accès multiple par répartition dans le temps.

**16.** Procédé selon l'une quelconque des revendications précédentes, dans lequel au moins certains de la pluralité de dispositifs de référence sont agencés en intérieur, de préférence à un emplacement fixe par rapport à un bâtiment.

**17.** Système de positionnement (10), comprenant :

une pluralité de dispositifs de réseau de référence (13) comprenant un dispositif maître et des dispositifs cibles, dans lequel des horloges des dispositifs cibles sont configurées pour être synchronisées avec une horloge du dispositif maître,
une unité de communication sans fil (11), dans laquelle l'unité de communication sans fil est configurée pour établir un réseau de communication sans fil permettant de communiquer avec un dispositif client (14, 15),
une unité de traitement configurée pour déterminer des informations de position du dispositif client,
dans lequel le système de positionnement est configuré pour mettre en œuvre le procédé selon l'une quelconque des revendications précédentes.

13    131

13"

15

13'    14

141    13'''

10    11    12

FIG 1

134

13

133    132    131

FIG 2

FIG 3

FIG 4

FIG 5

FIG 6

FIG 7

FIG 8

**EP 4 497 013 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012170046 A
- US 2017131383 A1
- WO 2021148415 A